# EUROPÄISCHE PATENTANMELDUNG

(11) **EP 3 839 274 A1**
(43) Veröffentlichungstag der Anmeldung: **23.06.2021**
(21) Anmeldenummer: 19465598.1
(22) Anmeldetag: 19.12.2019
(51) Int. Cl.: F16B 5/06

(54) **BEFESTIGUNGSELEMENT UND BEFESTIGUNGSBAUGRUPPE**

(71) Anmelder: Continental Automotive GmbH, 30165 Hannover (DE)
(72) Erfinder: Versigan, Adrian, 65824 Schwalbach a. Ts. (DE)

(57) **Zusammenfassung**

Die Erfindung betrifft ein Befestigungselement (14) für ein Bauteil (10) in einem Fahrzeug, wobei das Befestigungselement (14) eine Öffnung (18) aufweist, durch die sich ein längliches Halteelement (16) erstrecken kann, wobei das Befestigungselement (14) auf einer Vorderseite (24) eine Anlagefläche (26) für einen Flansch (22) des Halteelements (16) aufweist, und wobei auf einer der Vorderseite (24) entgegengesetzten Rückseite (30) des Befestigungselements (14) Aussparungen (35) und/oder Versteifungsstege (32, 34) vorgesehen sind.

Die Erfindung betriff des Weiteren eine Befestigungsbaugruppe (12) mit einem solchen Befestigungselement (14) und mit einem Halteelement (16).

## Beschreibung

Die Erfindung betrifft ein Befestigungselement sowie eine Befestigungsbaugruppe für ein Bauteil in einem Fahrzeug.

Im Fahrzeugbereich ist es häufig erforderlich, Bauteile, beispielsweise Gehäuse, an einer Fahrzeugstruktur, insbesondere der Fahrzeugkarosserie, zu befestigen. Die Bauteile bestehen häufig aus Plastik und weisen Befestigungselemente auf, durch die sich Halteelemente, beispielsweise Schrauben, erstrecken, mit welchen die Bauteile an der Fahrzeugstruktur befestigt werden können. Die Befestigungselemente müssen eine hohe Stabilität aufweisen, um bei allen im Fahrzeug auftretenden Belastungen eine zuverlässige Befestigung des Bauteils zu gewährleisten. Des Weiteren wirken auf die Befestigungselemente durch die Halteelemente hohe Kräfte, insbesondere bei selbstschneidenden Schrauben. Die Befestigungselemente müssen daher ausreichend stabil konstruiert sein. Darüber hinaus sollen die Bauteile und somit auch die Befestigungselemente möglichst leicht konstruiert sein, um Gewicht einzusparen.

Aufgabe der Erfindung ist es ein Befestigungselement sowie eine Befestigungsbaugruppe für ein Bauteil in einem Fahrzeug bereitzustellen, die eine ausreichende Stabilität bei gleichzeitig sehr geringem Gewicht aufweisen.

Zur Lösung der Aufgabe ist ein Befestigungselement für ein Bauteil in einem Fahrzeug vorgesehen, wobei das Befestigungselement eine Öffnung aufweist, durch die sich ein längliches Halteelement erstrecken kann, wobei das Befestigungselement auf einer Vorderseite eine Anlagefläche für einen Flansch des Halteelements aufweist, und wobei auf einer der Vorderseite entgegengesetzten Rückseite des Befestigungselements Aussparungen und/oder Versteifungsstege vorgesehen sind.

Die Versteifungsstege werden so angeordnet, dass diese die Anlagefläche rückseitig stützen und so die durch das Halteelement wirkenden Kräfte aufnehmen können. Die Aussparungen werden vorzugsweise in Bereichen vorgesehen, in welchen die Belastungen geringer sind, beispielsweise durch benachbarte Versteifungsstege, die die Belastungen aufnehmen können. Durch die Anordnung der Versteifungselement bzw. der Aussparungen kann das Befestigungselement gezielt an die auftretenden Belastungen angepasst werden, wodurch ein unnötiger Materialeinsatz und somit ein unnötig hohes Gewicht vermieden wird.

Des Weiteren hat die geringere Materialdicke durch die Versteifungsstege bzw. die Aussparungen Vorteile bei der Herstellung des Befestigungselements, da insbesondere beim Spritzgießen eine gleichmäßigere Abkühlung des Befestigungselements möglich ist, wodurch Spannungen aufgrund unterschiedlicher schnelle Abkühlung des Materials vermieden werden.

Beispielsweise erstrecken sich die Versteifungsstege radial bis zur Öffnung, so dass diese die Anlagefläche rückseitig über den gesamten Radius versteifen und somit stützen. Vorzugsweise sind die Versteifung in Umfangsrichtung gleichmäßig verteilt, um eine möglichst gleichmäßige Abstützung der Anlagefläche zu erzielen. In Abhängigkeit von dem Halteelement oder den auftretenden Belastungen ist aber auch eine andere Verteilung der rückseitigen Stege möglich.

Um eine noch bessere Versteifung bzw. Abstützung der Anlagefläche zu erzielen, kann auf der Rückseite zumindest ein insbesondere die Anlagefläche stützender ringförmig verlaufender Versteifungssteg vorgesehen sein. Beispielsweise erstrecken sich die radialen Versteifungsstege bis zu einem ringförmigen Versteifungssteg und/oder von einem solchen weg. Versteifungsstege können beispielsweise eine Gitterstruktur bilden, durch die eine besonders gute Abstützung der Anlagefläche erreicht wird.

Zwischen den Versteifungsstegen können Aussparungen vorgesehen sein, die sich insbesondere bis zur Öffnung erstrecken. Durch die Versteifungsstege ist vorzugsweise eine solche Versteifung der Anlagefläche möglich, dass zwischen den Versteifungsstegen der Materialeinsatz reduziert werden kann, wodurch das Gewicht des Befestigungselement reduziert werden kann.

Die Stege bilden insbesondere eine zweite Anlagefläche, mit der das Befestigungselement an der Fahrzeugstruktur angelegt werden kann. Die zweite Anlagefläche kann beispielsweise eben ausgebildet sein oder an die Fahrzeugstruktur angepasst sein.

Zur Lösung der Aufgabe ist des Weiteren eine Befestigungsbaugruppe mit einem vorstehend beschriebenen Befestigungselement und mit einem Halteelement vorgesehen, wobei das einen länglichen Grundkörper, der sich durch die Öffnung erstrecken kann, sowie einen Flansch, der sich an der Anlagefläche abstützen kann, aufweist. Die Versteifungsstege und/oder die Vorsprünge sind derart angeordnet, dass die Anlagefläche im Bereich des anliegenden Flansches rückseitig gestützt wird.

Am länglichen Grundkörper können Strukturen vorgesehen sein, unbezahlte Element in der Fahrzeugstruktur zu verankern, beispielsweise ein Gewinde oder eine Raststruktur. Am Flansch kann des Weiteren eine Werkzeugaufnahme, insbesondere eine Drehmomentübertragungsstruktur vorgesehen sein.

Weitere Vorteile Merkmale finden sich in der nachfolgenden Beschreibung in Verbindung mit beigefügten Zeichnungen. In diesem zeigen:
- Figur 1: eine Draufsicht auf ein Bauteil mit einer erfindungsgemäßen Befestigungsbaugruppe; und
- Figur 2: eine Ansicht des Bauteils aus Figur 1.

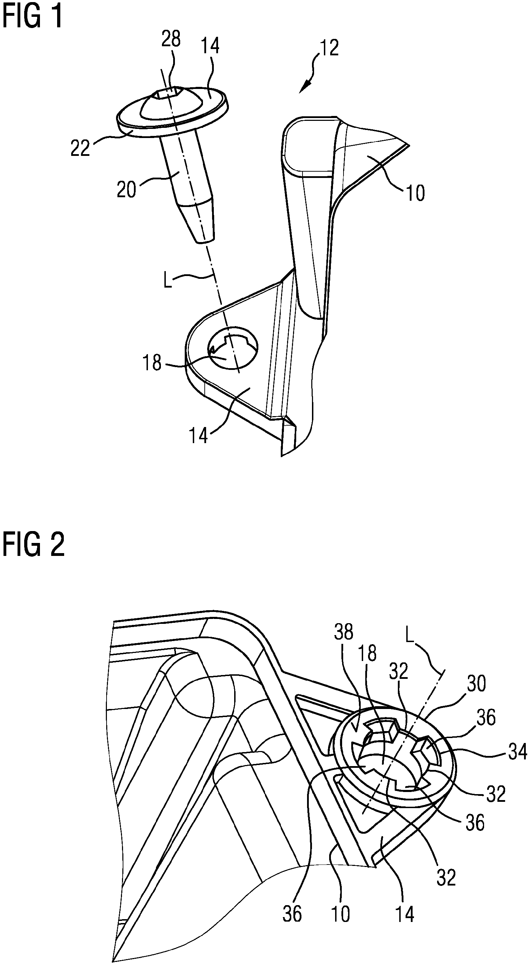

In den Figuren 1 und 2 ist ein Bauteil 10 mit einer Befestigungsbaugruppe 12 vorgesehen, mit der das Bauteil 10 an einer Fahrzeugstruktur, beispielsweise einer Fahrzeugkarosserie befestigt werden kann. Das Bauteil 10 ist beispielsweise ein Gehäuse.

Die Befestigungsbaugruppe 12 weist ein Befestigungselement 14 sowie ein Halteelement 16 auf. Das Befestigungselement 14 ist eine am Bauteil 10 vorgesehene Lasche, die insbesondere einstückig mit dem Bauteil 10 aus Kunststoff hergestellt ist. Das Befestigungselement 14 weist eine Öffnung 18 auf, durch die sich ein Grundkörper 20 des Halteelement 16 erstrecken kann. Das Halteelement 16 weist des Weiteren einen Flansch 22 auf, der sich auf einer an der Vorderseite 24 des Befestigungselements 14 vorgesehenen Anlagefläche 26 abstützen kann. Der Grundkörper 20 weist eine hier nicht im Detail dargestellte Haltestruktur auf, um das Halteelement 16 in der Fahrzeugstruktur zu verankern. Am Flansch 22 ist eine Werkzeugaufnahme 28, insbesondere mit einem Drehmomentübertragungsprofil, vorgesehen.

Das Befestigungselement 14 weist auf der der Vorderseite 24 gegenüberliegenden Rückseite 30 mehrere Versteifungsstege 32, 34 auf, die die Anlagefläche 26 rückseitig stützen und versteifen. Zwischen den Versteifungsstegen 32, 34 sind Aussparungen 36 vorgesehen, durch die das Material des Befestigungselements 14 und somit dessen Gewicht reduziert wird.

Der Versteifungssteg 34 erstreckt sich ringförmig um die Öffnung 18, wobei der Versteifungssteg so angeordnet ist, dass dieser die Anlagefläche 26 in einem Bereich, in dem der Flansch 22 anliegt, abstützt. Die Versteifungsstege 32 erstrecken sich vom Versteifungssteg 34 radial nach innen bis zur Öffnung 18, sodass die Anlagefläche 26 zwischen dem ringförmigen Versteifungssteg 34 und der Öffnung 18 vollständig versteift bzw. gestützt ist. Die Versteifungsstege 32 sind hierbei in Umfangsrichtung um die Öffnung 18 gleichmäßig verteilt angeordnet, sodass die Anlagefläche 26 gleichmäßig versteift bzw. abgestützt ist.

Die Aussparungen 36 erstrecken sich zwischen den Versteifungssteg 32, 34, wobei sich die Aussparungen 34 vom ringförmigen Versteifungssteg 34 radial nach innen bis zur Öffnung 18 erstrecken.

Die Versteifungssteg 32, 34 bilden eine zweite Anlagefläche 38, mit der das Befestigungselement 14 an der Fahrzeugstruktur aufliegen kann. Dadurch ist sichergestellt, dass Kräfte, die durch das Halteelement 16, insbesondere durch den Flansch 22 in Längsrichtung L auf die Anlagefläche 26 wirken, über die Versteifungssteg 32, 34 auf die Fahrzeugstruktur abgeleitet werden. Die Anlagefläche 26 ist somit gleichmäßig abgestützt, so dass auf diese keine zusätzlichen Belastungen, die zur einer Verformung oder Beschädigung der Anlagefläche 26 führen könnten, wirken können.

Die Versteifungsstege 32, 34 sowie die Aussparungen 36 können entsprechend der durch das Halteelement 16, insbesondere den Flansch 22 auf die Anlagefläche 26 wirkenden Belastungen angeordnet werden. Dadurch wird eine möglichst hohe Steifigkeit des Befestigungselements 14 bei möglichst geringem Gewicht erzielt.

Insbesondere die zweite Anlagefläche 38 an die Fahrzeugstruktur, an der das Bauteil 10 befestigt werden soll, angepasst werden, sodass ungleichmäßige Belastungen auf das Befestigungselement 14 vermieden werden.

## Patentansprüche

1. Befestigungselement (14) für ein Bauteil (10) in einem Fahrzeug, wobei das Befestigungselement (14) eine Öffnung (18) aufweist, durch die sich ein längliches Halteelement (16) erstrecken kann, wobei das Befestigungselement (14) auf einer Vorderseite (24) eine Anlagefläche (26) für einen Flansch (22) des Halteelements (16) aufweist, und wobei auf einer der Vorderseite (24) entgegengesetzten Rückseite (30) des Befestigungselements (14) Aussparungen (35) und/oder Versteifungsstege (32, 34) vorgesehen sind.

2. Befestigungselement nach Anspruch 1, **dadurch gekennzeichnet, dass** sich die Versteifungsstege (32) radial mit zur Öffnung (18) erstrecken.

3. Befestigungselement nach einem der Ansprüche 1 und 2, **dadurch gekennzeichnet, dass** auf der Rückseite (30) zumindest ein insbesondere die Anlagefläche (26) stützender ringförmig verlaufender Versteifungssteg (34) vorgesehen ist.

4. Befestigungselement nach einen der vorhergehenden Ansprüche, **dadurch gekennzeichnet, dass** zwischen den Versteifungsstegen (32, 34) Aussparungen (36) vorgesehen sind, die sich insbesondere bis zur Öffnung (18) erstrecken.

5. Befestigungselement nach einem der vorhergehenden Ansprüche, **dadurch gekennzeichnet, dass** die Versteifungsstege (32, 34) eine zweite Anlagefläche (38) bilden.

6. Befestigungsbaugruppe (12) mit einem Befestigungselement (14) nach einem der vorhergehenden Ansprüche und mit einem Halteelement (16), das einen länglichen Grundkörper (20), der sich durch die Öffnung (18) erstrecken kann, sowie einen Flansch (22), der sich an der Anlagefläche (26) abstützen kann, aufweist, wobei die Versteifungsstege (32, 34) und/oder die Vorsprünge (36) derart angeordnet sind, dass die Anlagefläche (26) im Bereich des anliegenden Flansches (22) nun rückseitig gestützt wird.
